(19) Europäisches Patentamt
European Patent Office
Office européen des brevets

(11) EP 3 919 561 A1

(12) # EUROPÄISCHE PATENTANMELDUNG

(43) Veröffentlichungstag:
**08.12.2021 Patentblatt 2021/49**

(21) Anmeldenummer: **20177768.7**

(22) Anmeldetag: **02.06.2020**

(51) Int Cl.:
***C08L 77/02*** *(2006.01)*
***C08K 3/32*** *(2006.01)*
***C08K 5/13*** *(2006.01)*
***C08K 5/36*** *(2006.01)*
***C08L 77/06*** *(2006.01)*
*C08K 7/14* *(2006.01)*
*C08K 5/5313* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LANXESS Deutschland GmbH**
**50569 Köln (DE)**

(72) Erfinder:
- **Körte, Leif**
  **41468 Neuss (DE)**
- **Endtner, Jochen**
  **50679 Köln (DE)**
- **Gau, Elisabeth**
  **41541 Dormagen (DE)**
- **Bienmüller, Matthias**
  **47803 Krefeld (DE)**
- **Joachimi, Detlev**
  **47800 Krefeld (DE)**

(54) **POLYAMID BASIERTE ERZEUGNISSE**

(57) Die vorliegende Erfindung betrifft die Polyamid basierte Erzeugnisse auf Basis von Zusammensetzungen enthaltend wenigstens ein sterisch gehindertes Phenol, wenigstens ein Phosphinsäurederivat, sowie wenigstens ein 3-Thiopropionat und deren Verwendung als Additiv zur Herstellung schlagzäher Polyamid basierter Erzeugnisse mit verbesserter Farbstabilität

EP 3 919 561 A1

**Beschreibung**

Die vorliegende Erfindung betrifft die Polyamid basierte Erzeugnisse auf Basis von Zusammensetzungen enthaltend wenigstens ein sterisch gehindertes Phenol, wenigstens ein Phosphinsäurederivat, sowie wenigstens ein 3-Thiopropionat und deren Verwendung als Additiv zur Herstellung schlagzäher Polyamid basierter Erzeugnisse mit verbesserter Farbstabilität.

Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor in Hybridfahrzeugen teilweise oder in Elektromobilen vollständig durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig spannungsführenden Komponenten ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Hochvolt Gefährdungsbereiche, um auf diese Weise einen unbeabsichtigten Kontakt mit einem Menschen, insbesondere Fahrer oder Mechaniker, zu vermeiden, wobei wiederum die eindeutige farbliche Kennzeichnung, insbesondere die farbliche Kennzeichnung in Orange, von Polyamid basierten Erzeugnissen in Hochvoltanwendungen eine besonders wichtige Rolle spielt. Die deutsche gesetzliche Unfallversicherung DGUV beschreibt in ihrer Information BGI / GUV-I 8686 zur "Qualifizierung für Arbeiten an Fahrzeugen mit Hochvoltsystemen" den Begriff Hochvolt, insbesondere bei Hybrid- und Brennstoffzellentechnologie sowie Elektrofahrzeugen, umfassend Spannungen >60 V und <1500V für Gleichspannungsbereich und >30V und 1000V für Wechselspannung.

Allerdings unterliegen Polyamid basierte Erzeugnisse bei Einwirkung äußerer Einflüsse, insbesondere von Licht, UV-Strahlen, Wärme oder widrigen Wetterbedingungen, Abbauerscheinungen. Abbauerscheinungen treten insbesondere infolge des Einwirkens hoher auftretender Temperaturen auf. Das Ergebnis solcher Abbauerscheinungen wird im Allgemeinen in Form eines Verlusts der mechanischen Eigenschaften, insbesondere der Schlagzähigkeit und insbesondere als Verfärbung wahrgenommen. Gerade aber Abbauprozesse in Form unerwünschter Verfärbungen sind im Falle eingefärbter Polyamid basierter Erzeugnisse, insbesondere orange eingefärbter Polyamid basierter Erzeugnisse im Hochvoltbereich unerwünscht, da in einem solchen Fall eine eindeutige und gleichbleibende farbliche Kennzeichnung über die Einsatzdauer, z.B. in Kraftfahrzeugen, nicht gewährleistet ist.

Anwendungen Polyamid basierter Erzeugnisse im Automobilbereich, vorzugsweise Anwendungen in der E-Mobilität, insbesondere im Hochvoltbereich wie Ladestecker, erfordern neben Anforderungen wie Steifigkeit in Form des E-Moduls, ferner eine gute Schlagzähigkeit. So können Polyamid basierte Erzeugnisse für die Anwendung im Hochvoltbereich beim Ein- und Ausbau sowie im Gebrauch im Kraftfahrzeug hohen mechanischen Kräften ausgesetzt sein und dürfen dabei nicht zerbrechen. Auch der Erhalt der Schlagzähigkeit über die Fahrzeuglebensdauer muss gewährleitet sein.

Die Lösung des Stands der Technik zur Verbesserung der Schlagzähigkeit von Polyamid basierten Zusammensetzungen ist der Einsatz von amorphen Kunststoffen wie ABS oder Elastomeren in Polyamid basierten Blends, wie im Kunststoffhandbuch 3/4, Technische Thermoplaste, Polyamide, Karl Hansen Verlag, München, Wien, 1998, S16 und S. 148-150 beschrieben ist. Solche Polymere, die in anderen Polymeren wie insbesondere Polyamid zur Erhöhung der Schlagzähigkeit eingesetzt werden, werden in der Fachsprache als Modifikatoren oder Schlagzähmodifikatoren bezeichnet und sind deshalb auch erfindungsgemäß als Schlagzähmodifikatoren zu bezeichnen. Als geeignete Schlagzähmodifikatoren werden in Polyamiden Ethylen-Propylen-Kautschuke (EPM, EPR) oder Ethylen-Propylen-Dien-Kautschuke (EPDM), styrolhaltige Elastomere, z.B. SEBS, SBS, SEPS, oder Acrylatkautschuke eingesetzt. Als Schlagzähmodifikatoren sind aber auch Nitril-Kautschuke (NBR, H-NBR), Siliconkautschuke, EVA und Microgele, wie sie in der WO 2005/033185 A1 beschrieben sind, geeignet. Untersuchungen im Rahmen der **Dissertation von** S. Moll zu "Untersuchung der Auswirkungen einer thermischoxidativen Beanspruchung auf das Emissionsverhalten von ABS und PP und der Korrelation mit dem Alterungsgrad" aus 2016 zeigten aber, dass sich Poly-(AcrylnitrilButadien-Styrol) "ABS" unter thermisch-oxidativer Belastung verfärbt. Zusätzlich ist dem Fachmann aus Kunststoffhandbuch 3/4, Technische Thermoplaste, Polyamide, Karl Hansen Verlag, München, Wien, 1998, S16 und S. 157 bekannt, dass durch Hinzufügen eines Schlagzähmodifikators die Steifigkeit in Form des E-Moduls, verschiedentlich auch Zugmodul genannt, verringert. Deshalb erscheinen die im Stand der Technik beschriebenen und typischerweise in Polyamid einzusetzenden Schlagzähmodifikatoren ungeeignet, insbesondere wenn farblich gekennzeichnete Polyamid basierte Komponenten nicht zu Verfärbungen neigen sollen.

Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs, sei es nach Charpy gemäß **DIN EN ISO 179,** oder nach Izod gemäß **DIN EN ISO 180,** kann die Schlagzähigkeit bestimmt werden. Gemessen wird die Schlagzähigkeit

im Rahmen der vorliegenden Erfindung nach **ISO180-1U** an spritzgegossenen Probekörpern bei 23°C im spritzfrischen Zustand.

Dem Fachmann ist aus Glasfaserverstärkte Kunststoffe, P.H. Seiden, Springer-Verlag Berlin, Heidelberg, New York, 1967, Seite 324 bis 325 bekannt, dass der Glasfasergehalt einen Einfluss auf die Schlagzähigkeit einer Polyamidzusammensetzung hat. Daher muss die schlagzähverbessernde Wirkung eines Schlagzähmodifikators, bzw. eines die Schlagzähigkeit verbessernden Additivs nur bei gleichem Glasfasergehalt betrachtet werden.

Zusammengefasst sind die Anforderungen an Polyamid basierte Erzeugnisse für Anwendungen in der E-Mobilität, insbesondere im Hochvoltbereich, vielseitig. Neben einer erhöhten Schlagzähigkeit müssen sowohl die farbliche Kennzeichnung, als auch die mechanischen Eigenschaften, insbesondere die Schlagzähigkeit, über die Fahrzeuglebensdauer gewährleitet sein. Wie oben dargelegt ist der im Stand der Technik diskutierte Einsatz von Schlagzähmodifikatoren nicht geeignet, all diese Erfordernisse für Polyamide zufriedenstellend zu lösen.

Die Aufgabe der vorliegenden Erfindung bestand daher in der Bereitstellung Polyamid basierter Zusammensetzungen bzw. daraus herzustellender Erzeugnisse, die neben einer verbesserten Schlagzähigkeit gemessen nach **ISO180-1U** im Vergleich zu nicht mit Schlagzähmodifikator modifizierten Polyamidzusammensetzungen gleichzeitig ein gutes Alterungsverhalten in Form eines verbesserten Farberhalts bzw. einer verbesserten Farbstabilität nach Heißluftalterung und zudem ein gutes Alterungsverhalten in Form eines ausreichenden Erhalts der Schlagzähigkeit nach Heißluftalterung aufweisen.

Unter einem guten Alterungsverhalten in Form eines verbesserten Farberhalts bzw. einer verbesserten Farbstabilität nach Heißluftalterung wird erfindungsgemäß verstanden, dass die Änderung des Helligkeitswertes $|\Delta L^*|$ berechnet gemäß **DIN EN ISO 11664-4** nach Heißluftlagerung über 1000h bei 150°C gering ausfällt, vorzugsweise die Änderung des Helligkeitswertes im Bereich von $|\Delta L^*| = 0$ bis $|\Delta L^*| = 30$ liegt, besonders bevorzugt die Änderung des Helligkeitswertes im Bereich von $|\Delta L^*|= 0$ bis $|\Delta L^*| = 25$ liegt.

Unter einem guten Alterungsverhalten in Form eines ausreichenden Erhalts der Schlagzähigkeit nach Heißluftalterung wird erfindungsgemäß verstanden, dass die Schlagzähigkeit gemessen nach **ISO180-1U** nach Heißluftalterung über 500h bei 140°C nicht mehr als 30% im Vergleich zum Zeitpunkt bei 0 h abfällt.

Die Lösung der Aufgabe ist die Verwendung von Mischungen enthaltend wenigstens ein sterisch gehindertes Phenol, wenigstens ein Phosphinsäurederivat und wenigstens ein 3-Thiopropionat.

Gegenstand der vorliegenden Erfindung sind **Zusammensetzungen** sowie darauf basierende **Erzeugnisse** enthaltend

a) wenigstens ein Polyamid, vorzugsweise Polyamid 6 oder Polyamid 66,
b) wenigstens ein sterisch gehindertes Phenol,
c) wenigstens ein Phosphinsäurederivat der allgemeinen Formel (I),

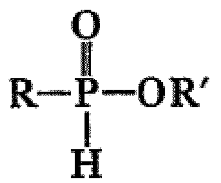

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat,

mit der Maßgabe, dass auf 100 Massenanteile der Komponente a)
0,03 bis 3 Massenanteile, bevorzugt 0,05 bis 1 Massenanteile der Komponente b),
0,05 bis 5 Massenanteile, bevorzugt 0,25 bis 1 Massenanteile, der Komponente c) und
0,05 bis 5 Massenanteile, bevorzugt 0,2 bis 1 Massenanteile, der Komponente d) eingesetzt werden.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Überraschenderweise zeigen erfindungsgemäße Zusammensetzungen bzw. darauf basierende Erzeugnisse enthaltend die Komponenten b), c) und d) eine höhere Schlagzähigkeit gemessen nach **ISO180-1U** im Vergleich zu nicht mit Schlagzähmodifikator modifizierten Polyamidzusammensetzungen. Gleichzeitig zeigt sich für diese erfindungsgemäßen Zusammensetzungen und darauf basierende Erzeugnisse überraschenderweise neben einem guten Alterungsverhalten in Form eines verbesserten Farberhalts bzw. einer verbesserten Farbstabilität nach Heißluftalterung, auch ein gutes Alterungsverhalten in Form eines ausreichenden Erhalts der Schlagzähigkeit nach Heißluftalterung. Die vielseitigen Anforderungen an Polyamid basierte Erzeugnisse für Anwendungen in der E-Mobilität werden somit durch den Einsatz der Komponenten b), c) und d) gleichzeitig erfüllt.

Dem Fachmann ist aus P. H. Seiden, Glasfaserverstärkte Kunststoffe, Seite 324-325, Kapitel "Glasfaserverstärkte Thermoplaste" von K. Schlichting, Springer Verlag Berlin 1967 bekannt, dass der Glasfasergehalt einen Einfluss auf die Schlagzähigkeit einer Polyamidzusammensetzung hat. Da also Verstärkungsmaterialien, insbesondere Glasfasern, selbst die Schlagzähigkeit von Polyamiden beeinflussen, beziehen sich vergleichende Aussagen im Rahmen der vorliegenden Erfindung stets auf Zusammensetzungen oder Erzeugnisse mit demselben Gehalt an Verstärkungsmaterialien, insbesondere Glasfasern. Diese Aussage betrifft auch erfindungsgemäße Verfahren und Verwendungen.

Die Erfindung betrifft ferner die **Verwendung** von Mischungen enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

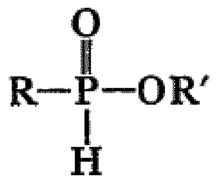

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat,

zur Herstellung Polyamid basierter Erzeugnisse mit geringer Änderung des Helligkeitswertes $|\Delta L^*|$ berechnet gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf 100 Massenanteile wenigstens eines als Komponente a) einzusetzenden Polyamids, vorzugsweise Polyamid 6 oder Polyamid 66,
0,03 bis 3 Massenanteile, bevorzugt 0,05 bis 1 Massenanteile, der Komponente b),
0,05 bis 5 Massenanteile, bevorzugt 0,25 bis 1 Massenanteile, der Komponente c) und
0,05 bis 5 Massenanteile, bevorzugt 0,2 bis 1 Massenanteile der Komponente d) eingesetzt werden.

Das Ammonium-Ion $NH_4^+$ für R' ist ein Kation, das mit Anionen ähnlich wie Alkalimetallionen Salze bildet. Es ist die konjugierte Säure zur Base Ammoniak ($NH_3$).

Die Erfindung betrifft schließlich ein **Verfahren** zur Verringerung eines Helligkeitswertverlusts $|\Delta L^*|$ berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) 0,03 bis 3 Massenanteile, bevorzugt 0,05 bis 1 Massenanteile wenigstens eines sterisch gehinderten Phenols,

c) 0,05 bis 5 Massenanteile, bevorzugt 0,25 bis 1 Massenanteile wenigstens eines Phosphinsäurederivats der allgemeinen Formel (I),

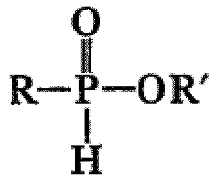

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,05 bis 5 Massenanteile, bevorzugt 0,2 bis 1 Massenanteile, wenigstens eines 3-Thiopropionats,

auf 100 Massenanteile eines als Komponente a) einzusetzenden Polyamids einsetzt.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Zur Klarstellung sei angemerkt, dass im Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren die Prüfung auf Schlagzähigkeit nach **ISO 180-1U** (Izod) an spritzgegossenen nach **DIN EN ISO 1874-2** festgelegten Prüfkörpern im spritzfrischen Zustand bei 23°C durchgeführt wurde und durchzuführen ist. Der spritzfrische Zustand, auch "dry as moulded", wird in der **DIN EN ISO 1874-2** definiert.

Zur Klarstellung sei zudem angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines Erhalts der Schlagzähigkeit durch Lagerung von spritzgegossenen nach **DIN EN ISO 1874-2** festgelegten Prüfkörpern in einem Materialprüfschrank des Modells Binder FP115 bei Umluft bei Temperaturen von 140°C über 500h erfolgte. Die Schlagzähigkeit wurde an diesen Probekörpern nach der Lagerung nach **ISO 180-1U** bei 23°C bestimmt.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L* senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Verfärbung von Polymer basierten Erzeugnisses durch die oxidative Schädigung der Polymermatrix kann durch die Veränderung der Helligkeit L* über die Lagerungszeit bei hoher Temperatur bestimmt werden.

Zur Klarstellung sei deshalb auch angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines verbesserten Farberhalts / einer verbesserten Farbstabilität durch Lagerung von spritzgegossenen Platten von 60mm • 40mm • 4 mm in einem Materialprüfschrank des Modells Binder FP115 bei Umluft bei Temperaturen von 150°C, im folgenden Heißluftalterung genannt, erfolgt(e). Als Maß für die Verfärbung wird im Rahmen der vorliegenden Erfindung die Differenz $\Delta L^*$ des Helligkeitswertes L* von spritzgegossenen Erzeugnissen auf Basis erfindungsgemäßer Polymerzusammensetzungen nach Heißluftalterung über 1000 Stunden $L^*_{1000}$ und vor der Heißluftalterung $L^*_0$ gemessen und der Betrag über die Differenz gebildet, um die Änderung in positiven Zahlen auszudrücken.

$$|\Delta L^*| = |L^*_{1000} - L^*_0|$$

Somit zeichnet sich erfindungsgemäß ein gutes Alterungsverhalten in Form eines verbesserten Farberhalts bzw. einer verbesserten Farbstabilität nach Heißluftalterung dadurch aus, dass der Betrag der Änderung des Helligkeitswertes $|\Delta L^*|$ kleiner ausfällt. Der Helligkeitswert L* der Proben wird im Rahmen der vorliegenden Erfindung an Platten der Größe 60mm • 40mm • 4 mm bestimmt und nach **DIN EN ISO 11664-4** berechnet.

Zur Klarstellung sei ferner angemerkt, dass vom Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren alle aufgeführten allgemeinen oder in Vorzugsbereichen genannten Definitionen und Parameter in beliebigen Kombinationen umfasst sind. Dies betrifft insbesondere auch die einzusetzenden Mengenangaben der einzelnen Komponenten in den im Rahmen der vorliegenden Anmeldung beanspruchten Verfahren und Verwendungen. Die im Rahmen dieser Anmeldung genannten Normen beziehen sich auf die zum Anmeldetag dieser Erfindung geltenden Fassung. Sofern nicht anders angegeben handelt es sich bei Prozentangaben um Gewichtsprozente.

**Bevorzugte Ausführungsformen**

In einer weiteren bevorzugten Ausführungsform betrifft die Erfindung **Zusammensetzungen** sowie **Polyamid basierte Erzeugnisse** enthaltend zusätzlich zu den Komponenten a), b), c) und d) noch e) wenigstens einen **Füllstoff oder Verstärkungsstoff** zu 5 bis 185 Massenanteilen, bevorzugt zu 5 bis 100 Massenanteilen, jeweils bezogen auf 100 Massenanteile der Komponente a).

In einer besonders bevorzugten Ausführungsform betrifft die Erfindung **Zusammensetzungen** sowie **Polyamid basierte Erzeugnisse** enthaltend zusätzlich zu den Komponenten a), b), c) und d) noch e) wenigstens Glasfasern als **Verstärkungsstoff** zu 5 bis 185 Massenanteilen, bevorzugt zu 5 bis 100 Massenanteilen, jeweils bezogen auf 100 Massenanteile der Komponente a).

In diesem Fall sind bevorzugter Gegenstand der vorliegenden Erfindung **Zusammensetzungen** sowie darauf basierende **Erzeugnisse** enthaltend

a) wenigstens ein Polyamid, vorzugsweise Polyamid 6 oder Polyamid 66,
b) wenigstens ein sterisch gehindertes Phenol,
c) wenigstens ein Phosphinsäurederivat der allgemeinen Formel (I),

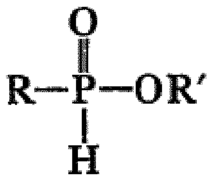

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat, und
e) wenigstens Glasfasern,

mit der Maßgabe, dass auf 100 Massenanteile der Komponente a)
0,03 bis 3 Massenanteile, bevorzugt 0,05 bis 1 Massenanteile der Komponente b),
0,05 bis 5 Massenanteile, bevorzugt 0,25 bis 1 Massenanteile, der Komponente c),
0,05 bis 5 Massenanteile, bevorzugt 0,2 bis 1 Massenanteile, der Komponente d), und
5 bis 185 Massenanteile, bevorzugt 5 bis 100 Massenanteile, der Komponente e) eingesetzt werden.

Zur Klarstellung sei angemerkt, dass vom Rahmen der vorliegenden Erfindung alle Füll- und Verstärkungsstoffe sowie die hier genannten Mengenangaben sowohl die Zusammensetzungen, als auch die daraus herzustellenden Polyamid basierten Erzeugnisse, insbesondere Polyamid basierte Erzeugnisse in Hochvoltanwendungen, betreffen, wie auch auf die erfindungsgemäßen Verwendungen und Verfahren anzuwenden sind.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Die Erfindung betrifft deshalb zudem die **Verwendung** von Mischungen enthaltend

a) wenigstens ein Polyamid, vorzugsweise Polyamid 6 oder Polyamid 66,

b) wenigstens ein sterisch gehindertes Phenol,

c) wenigstens ein Phosphinsäurederivat der allgemeinen Formel (I),

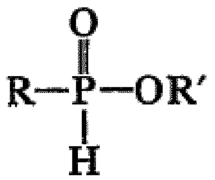

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat, und

e) wenigstens Glasfasern

zur Herstellung Polyamid basierter Erzeugnisse mit geringer Änderung des Helligkeitswertes $|\Delta L^*|$ berechnet gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf
100 Massenanteile wenigstens eines als Komponente a) einzusetzenden Polyamids, vorzugsweise Polyamid 6 oder Polyamid 66,
0,03 bis 3 Massenanteile, bevorzugt 0,05 bis 1 Massenanteile, der Komponente b),
0,05 bis 5 Massenanteile, bevorzugt 0,25 bis 1 Massenanteile, der Komponente c),
0,05 bis 5 Massenanteile, bevorzugt 0,2 bis 1 Massenanteile, der Komponente d) und
5 bis 185 Massenanteile, bevorzugt 5 bis 100 Massenanteile, der Komponente e) eingesetzt werden.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Die Erfindung betrifft ferner auch ein **Verfahren** zur Verringerung eines Helligkeitswertverlusts $|\Delta L^*|$ berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) 0,03 bis 3 Massenanteile, bevorzugt 0,05 bis 1 Massenanteile wenigstens eines sterisch gehinderten Phenols,

c) 0,05 bis 5 Massenanteile, bevorzugt 0,25 bis 1 Massenanteile wenigstens eines Phosphinsäurederivats der allgemeinen Formel (I),

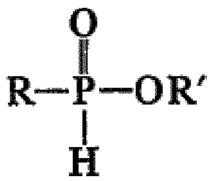

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,05 bis 5 Massenanteile, bevorzugt 0,2 bis 1 Massenanteile wenigstens eines 3-Thiopropionats,

auf 100 Massenanteile eines als Komponente a) einzusetzenden Polyamids, vorzugsweise Polyamid 6 oder Polyamid 66, sowie 5 bis 185 Massenanteile, bevorzugt 5 bis 100 Massenanteile, Glasfasern als Komponente e) einsetzt.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

In einer weiteren Ausführungsform betrifft die Erfindung **Zusammensetzungen** sowie **Polyamid basierte Erzeugnisse** enthaltend zusätzlich zu den Komponenten a), b), c), d) und e) oder anstelle von e) noch wenigstens ein **Flammschutzmittel** f) zu 3 bis 100 Massenanteilen, bevorzugt zu 5 bis 80 Massenanteilen, besonders bevorzugt zu 10 bis 50 Massenanteilen, jeweils bezogen auf 100 Massenanteile der Komponente a).

Zur Klarstellung sei angemerkt, dass vom Rahmen der vorliegenden Erfindung alle als Komponente f) einzusetzenden Flammschutzmittel sowie die hier genannten Mengenangaben sowohl die Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und Verfahren anzuwenden sind.

In einer weiteren Ausführungsform betrifft die Erfindung **Zusammensetzungen** sowie **Polyamid basierte Erzeugnisse** enthaltend zusätzlich zu den Komponenten a), b), c), d) und e) oder anstelle von e) und/oder f) noch wenigstens ein von den Komponenten b), c), d), e) und f) verschiedenes **Additiv** g) zu 0,01 bis 80 Massenanteilen, bevorzugt zu 0,05 bis 50 Massenanteilen, besonders bevorzugt zu 0,1 bis 30 Massenanteilen, jeweils bezogen auf 100 Massenanteile der Komponente a).

Zur Klarstellung sei angemerkt, dass vom Rahmen der vorliegenden Erfindung alle als Komponente g) einzusetzenden Additive sowie die hier genannten Mengenangaben sowohl die Polyamid basierten Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und Verfahren anzuwenden sind.

**Komponente a)**

Die erfindungsgemäß als Komponente a) einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 66, Polyamid 46 und/oder teilaromatischen Copolyamide eingesetzt. Bevorzugte teilaromatische Copolyamide sind PA6T/6, PA6T/66, PA6T/6I oder PA6T/6I/66.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω-Aminocarbonsäure bzw. von dem davon abgeleiteten Lactam, im Falle des PA 6 also dem ε-Caprolactam, ausgegangen worden ist.

Das erfindungsgemäß bevorzugt als Komponente a) einzusetzende PA6 [CAS Nr. 25038-54-4] hat vorzugsweise eine nach **ISO 307** in 0,5 gew.-%iger Lösung in 96 gew.-%iger Schwefelsäure bei 25 °C zu bestimmende Viskositätszahl im Bereich von 80 bis 180 ml/g, besonders bevorzugt im Bereich von 85 bis 170 ml/g und ganz besonders bevorzugt im Bereich von 90 bis 160 ml/g. Erfindungsgemäß bevorzugt als Komponente a) einzusetzendes Polyamid 6 ist beispielswiese als Durethan® B29 bei der Lanxess Deutschland GmbH, Köln erhältlich.

Bevorzugt weist ein als Komponente a) einzusetzendes Polyamid 66 [CAS Nr. 32131-17-2] eine nach **ISO 307** in 0,5 gew.-%iger Lösung in 96 gew.-%iger Schwefelsäure bei 25 °C zu bestimmende Viskositätszahl im Bereich von 80 bis 180 ml/g auf, ganz besonders bevorzugt eine Viskositätszahl im Bereich von 85 bis 170 ml/g, insbesondere bevorzugt im Bereich von 90 bis 160 ml/g. Erfindungsgemäß als Komponente a) einzusetzendes Polyamid 66 ist beispielsweise als Ultramid® A27E01 bei der BASF SE, Ludwigshafen, erhältlich.

Das erfindungsgemäß als Komponente a) einzusetzende Polyamid kann auch im Gemisch mit wenigstens einem anderen Polyamid, als Copolyamid, und/oder wenigstens einem anderen Polymer eingesetzt werden, mit der Maßgabe, dass das weitere eingesetzte Polymer die Verfärbung nach Langzeitlagerung in Heißluft bei bis zu 150°C nicht negativ beeinflusst. Im Falle des Einsatzes wenigstens eines weiteren Polyamids oder wenigstens eines anderen

Polymers erfolgt dieser vorzugsweise oder gegebenenfalls unter Einsatz wenigstens eines Kompatibilisators.

Dem als Komponente a) einzusetzenden Polyamid können übliche Additive, vorzugsweise dem Fachmann bekannte Entformungsmittel, Stabilisatoren und/oder Fließhilfsmittel, bereits in der Schmelze zugemischt werden.

**Komponente b)**

Erfindungsgemäß als Komponente b) einzusetzende **sterisch gehinderte Phenole** sind Verbindungen mit phenolischer Struktur, die am phenolischen Ring in unmittelbarerer Nachbarschaft zur phenolischen OH-Gruppe wenigstens eine sterisch anspruchsvolle Gruppe in Form einer tert.-Butylgruppe aufweisen. Gemäß **"http://de.wikipedia.org/wiki/Sterische_Hinderung"** bezeichnet eine sterische Hinderung in der organischen Chemie den Einfluss der räumlichen Ausdehnung eines Moleküls auf den Verlauf einer Reaktion. Der Begriff wurde erstmals 1894 von Victor Meyer für die Beobachtung geprägt, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung oder einer sterisch anspruchsvollen Gruppe ist die Anwesenheit von sehr raumerfüllenden *tert*-butyl-Gruppen.

Bevorzugt sind sterisch gehinderte Phenole der allgemeinen Formel (II),

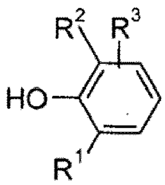

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht.

Besonders bevorzugt sind Phenole der allgemeinen Formel (II),

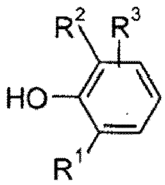

(II)

worin $R^1$ und $R^2$ jeweils für eine tert-Butylgruppe stehen und $R^3$ für eine Alkylgruppe, für eine substituierte Alkylgruppe, für eine Alkoxygruppe oder für eine substituierte Aminogruppe steht.

Bevorzugte sterisch gehinderte Phenole sind auch Verbindungen der Formel (II),

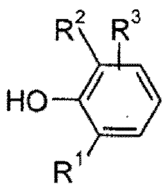

(II)

worin $R^1$ für eine Methylgruppe steht und $R^2$ für eine substituierte Alkylgruppe und $R^3$ für eine Alkylgruppe, für eine substituierte Alkylgruppe, für eine Alkoxygruppe oder für eine substituierte Aminogruppe steht.

Besonders bevorzugte sterisch gehinderte Phenole sind auch Verbindungen der Formel (II),

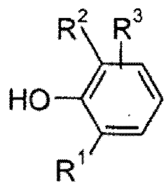

(II)

worin $R^1$ für eine Methylgruppe steht und $R^2$ für eine tert-Butylgruppe steht und $R^3$ für eine Alkylgruppe, für eine substituierte Alkylgruppe, für eine Alkoxygruppe oder für eine substituierte Aminogruppe steht.

Bevorzugte Phenole der Formel (II) werden in der DE-A 27 02 661 beschrieben, deren Inhalt von der vorliegenden Anmeldung vollumfänglich umfasst wird.

Eine weitere Gruppe bevorzugt als Komponente b) einzusetzender sterisch gehinderter gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (III)

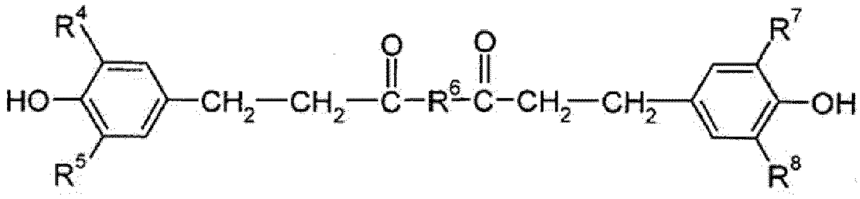

(III)

worin $R^4$, $R^5$, $R^7$ und $R^8$ unabhängig voneinander $C_1$-$C_8$-Alkylgruppen darstellen, die ihrerseits substituiert sein können und wovon mindestens eine davon eine sterisch anspruchsvolle Gruppe ist, und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Bevorzugt werden symmetrische Verbindungen der Formel (III) eingesetzt in denen $R^4 = R^7$ und $R^5 = R^8$ gilt, wobei mindestens $R^4$ und $R^7$ sterisch anspruchsvolle Gruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Besonders bevorzugt werden symmetrische Verbindungen der Formel (III) eingesetzt in denen $R^4 = R^7$ und $R^5 = R^8$ gilt, wobei $R^4$ und $R^7$ sterisch anspruchsvolle Gruppen sind und $R^5$ und $R^8$ Methylgruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Ganz besonders bevorzugt werden symmetrische Verbindungen der Formel (III) eingesetzt in denen $R^4$ und $R^7$ tert-Butyl Gruppen sind und $R^5$ und $R^8$ Methylgruppen sind und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

Besonders bevorzugte als Komponente b) einzusetzende Verbindungen sind solche der allgemeinen Formel (IV)

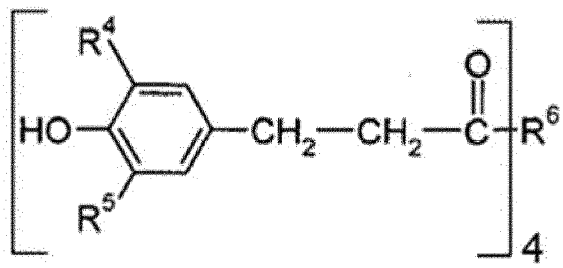

(IV)

worin $R^4$, $R^5$ unabhängig voneinander $C_1$-$C_8$-Alkylgruppen darstellen, die ihrerseits substituiert sein können und wovon mindestens eine davon eine sterisch anspruchsvolle Gruppe ist und $R^6$ für ein verbrückendes Tetraalkoholderivat, bevorzugt Pentraerythrytol, Pentaerythrytolderivat, oder für ein Tetraamin steht. Bevorzugt werden Verbindungen der Formel (IV) eingesetzt in denen $R^4$ = Methyl und $R^5$ = ter.-Butyl und $R^6$ für ein verbrückendes Tetraalkohol, bevorzugt Pentraerythrytol, oder Pentaerythrytolderivate, oder ein Tetraamin steht.

Ganz besonders bevorzugte als Komponente b) einzusetzende Verbindungen sind solche der allgemeinen

Formel (V)

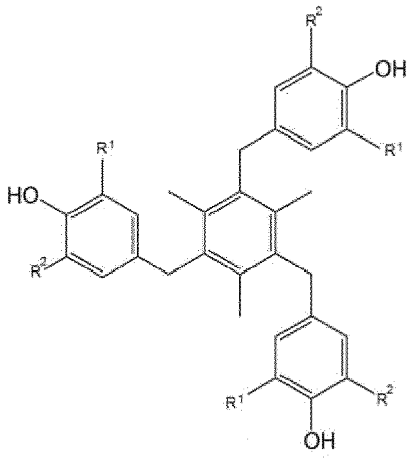

(V)

worin $R^1$ und $R^2$ unabhängig voneinander für $C_1$-$C_8$-Alkylgruppen stehen, die ihrerseits substituiert sein können und wovon mindestens eine davon eine sterisch anspruchsvolle Gruppe ist. Insbesondere bevorzugt sind Verbindungen der allgemeinen Formel (V) worin $R^1$ für Methyl und $R^2$ = für tert.-Butyl steht.

Insbesondere bevorzugte Verbindungen der Formel (II) sind Verbindungen der Reihe Triethylenglycol-bis(3-tert-butyl-4-hydroxy-5-methylphenyl)propionat (Irganox® 245 der BASF SE, [CAS No. 36443-68-2]);
Hexamethylen-bis[3-(3,5-di-tert-butyl-4-hydroxyphenyl)propionat] (Irganox® 259 der BASF SE, [CAS No. 35074-77-2]);
N,N'-1,6-hexanediylbis[3,5-bis(1,1-dimethylethyl)-4-hydroxyphenylpropanamid] (Irganox® 1098 der BASF SE, [CAS No. 23128-74-7]):

3,9-Bis[2-[3-(3-tert-butyl-4-hydroxy-5-methylphenyl)-propionyloxy]-1,1-dimethylethyl]-2,4,8,10-tetraoxaspiro-[5.5]-undecan (Sumilizer® GA-80 der Sumitomo Chemical Co. Ltd., [CAS No. 90498-90-1]);

Tetrakis[methylen-3-(3,5-di-tert-butyl-4-hydroxyphenyl)propionate]methan (Songnox® 1010 der Songwon Industrial Group, [CAS No. 6683-19-8]);

Thiodiethylen-bis[3-(3,5-di-tert-butyl-4-hydroxyphenyl)propionat] (Songnox® 1035 der Songwon Industrial Group [CAS No. 41484-35-9]);

1,3,5-Trimethyl-2,4,6-tris(3,5-di-tert-butyl-4-hydroxybenzyl)benzen (Songnox® 1330 der Songwon Industrial Group [CAS No. 1709-70-2]);

1,2-Bis(3,5-di-tert-butyl-4-hydroxyhydrocinnamoly)hydrazin (Songnox® 1024 der Songwon Industrial Group [CAS No. 32687-78-8]);

Ganz besonders bevorzugte als Komponente b) einzusetzende sterisch gehinderte Phenole werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-proprionat], 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Erfindungsgemäß insbesondere ganz besonders bevorzugt wird als Komponente b) 3,9-bis(2-(3-(3-tert-butyl-4-hydroxy-5-methylphenyl)propionyloxy-1,1-dimethylethyl)-2,4,8,10-tetraoxaspiro[5.5]undecane, [CAS No. 90498-90-1], eingesetzt, das als Sumilzer® GA80 bei der Sumitomo Chemical Co., Ltd. erhältlich ist.

## Komponente c)

Als Komponente c) wird wenigstens ein Phosphinsäurederivat der allgemeinen Formel (I) eingesetzt

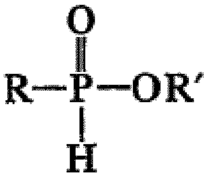

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht.

Wenn R ein Wasserstoffatom darstellt handelt es sich um Hypophosphorsäure, wenn R eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R eine Alkyl-, Cycloalkyl- oder Aryl-Gruppe darstellt werden bevorzugt Salze und Ester der Phoshinsäure eingesetzt. Bevorzugt werden Salze der Phosphinsäure eingesetzt, wobei es sich auch um Hydrate der Salze handeln kann. Ganz besonders bevorzugt sind Alkali-, Erdalkalimetallsalze sowie Metallsalze der 12. oder 13. Gruppe des Periodensystems der Phosphinsäure, wobei es sich auch um Hydrate der Salze handeln kann.

Wenn R ein Wasserstoffatom ist handelt es sich um Hypophosphorsäure. Bevorzugt werden Salze und Ester der Hypophosphorsäure eingesetzt. Besonders bevorzugt werden Alkali-, Erdalkalimetallsalze, Salze mit Ammonium Ion als Kation, sowie Metallsalze der 12. oder 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Ganz besonders bevorzugt wird als Komponente c) Natriumhypophosphit [CAS No. 7681-53-0] oder Natriumhypophosphit Monohydrat [CAS No. 10039-56-2] eingesetzt. Natriumhypophosphit und Natriumhypophosphit Monohydrat sind kommerziell unter anderem bei der Firma Sigma Aldrich zu erwerben.

**Komponente d)**

Als Komponente d) werden vorzugsweise 3-Thiopropionate der allgemeinen Formel (VI) eingesetzt,

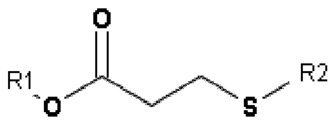

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht.

Bevorzugt werden als Komponente d) 3-Thiopropionate der allgemeinen Formel (VII) eigesetzt,

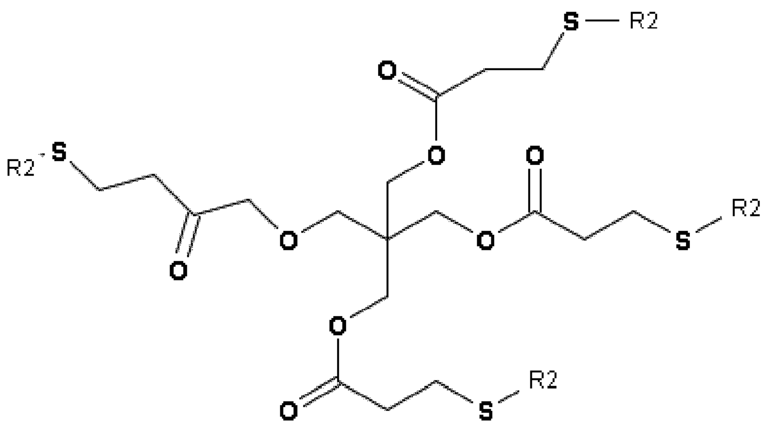

(VII)

worin R2 für einen Alkylrest mit 4 bis 20 Kohlenstoffatomen steht.

Erfindungsgemäß besonders bevorzugt wird als Komponente d) Pentaerythrityltetrakis(3-dodecylthiopropionat) mit der CAS No. 29598-76-3 und erhältlich bei der Firma Rialon Corporation, China, unter dem Handelsnamen Rianox® 412S eingesetzt.

**Komponente e)**

Als Komponente e) wird wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird wenigstens ein Füll- oder Verstärkungsstoff aus der Gruppe Kohlenstofffasern [CAS No. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS No. 65997-17-3], amorphe Kieselsäure [CAS No. 7631-86-9], Quarzmehl [CAS No. 14808-60-7], Calciumsilicat [CAS No. 1344-95-2], Calciummetasilicat [CAS No. 10101-39-0], Magnesiumcarbonat [CAS No. 546-93-0], Kaolin [CAS No. 1332-58-7], calciniertes Kaolin [CAS No. 92704-41-1], Kreide [CAS No.1317-65-3], Kyanit [CAS No. 1302-76-7], gepulverter oder gemahlener Quarz [CAS No. 14808-60-7], Glimmer [CAS No. 1318-94-1], Phlogopit [CAS No. 12251-00-2], Bariumsulfat [CAS No. 7727-43-7], Feldspat [CAS No. 68476-25-5], Wollastonit [CAS No. 13983-17-0], Montmorillonit [CAS No. 67479-91-8], Pseudoböhmit der Formel AlO(OH), Magnesiumcarbonat [CAS No. 12125-28-9] und Talkum [CAS No. 14807-96-6] eingesetzt. Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß bevorzugt als Komponente e) einzusetzende Glasfasern sind geschnittene Langglasfasern mit einer vor Einarbeitung in Formmassen mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe: **https://de.wikipedia.org/wiki/Laserbeugungs-Partikelgr%C3%B6%C3%9Fenanalyse**

Bevorzugte, als Komponente d) einzusetzende Glasfasern haben einen mittels Laserdiffraktometrie gemäß **ISO 13320** zu bestimmenden mittleren Faserdurchmesser im Bereich von 7 bis 18 $\mu$m, besonders bevorzugt im Bereich von 9 bis 15 $\mu$m.

Die als Komponente e) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente e), insbesondere für die Behandlung von Glasfasern, sind Silanverbindungen der allgemeinen Formel (VIII)

$$(X\text{-}(CH_2)_q)_k\text{-}Si\text{-}(O\text{-}C_rH_{2r+1})_{4-k} \qquad \text{(VIII)}$$

worin

X für $NH_2$-, Carboxyl-, HO- oder

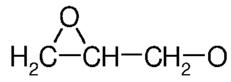

steht,

q in Formel (VIII) für eine ganze Zahl von 2 bis 10, bevorzugt 3 bis 4 steht,

r in Formel (VIII) für eine ganze Zahl von 1 bis 5, bevorzugt 1 bis 2 steht und

k in Formel (VIII) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent **X** in Formel (VIII) eine Glycidyl- oder eine Carboxylgruppe enthalten, wobei Carboxylgruppen insbesondere ganz besonders bevorzugt sind.

Für die Ausrüstung der als Komponente e) einzusetzenden Füllstoffe, vorzugsweise Glasfasern, wird der Haftvermittler, bevorzugt die Silanverbindungen gemäß Formel (X), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente e), eingesetzt.

Die als Komponente e) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 $\mu$m bis 300 $\mu$m.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente e) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente e) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis UD im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 μm, besonders bevorzugt bei kleiner 15 μm, insbesondere bevorzugt bei kleiner 10 μm.

Bevorzugt wird als Komponente e) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt mit einem d90 im Bereich von 10 bis 150 μm, besonders bevorzugt mit einem d90 im Bereich von 15 bis 80 μm, ganz besonders bevorzugt mit einem d90 im Bereich von 16 bis 25 μm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist das nicht-faserförmige und nicht-geschäumte gemahlene Glas von partikelförmiger, nicht zylindrischer Gestalt und hat vor Verarbeitung zu Formmassen ein mittels Laserdiffraktometrie gemäß **ISO 13320** zu bestimmendes Längen- zu Durchmesserverhältnis L/D kleiner 5, bevorzugt kleiner als 3, besonders bevorzugt kleiner 2. Der Wert Null ist selbstverständlich ausgeschlossen.

Das in einer Ausführungsform als Komponente e) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem vor Verarbeitung zu Formmassen mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente e) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente e) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente e) bevorzugt ist.

**Komponente f)**

In bevorzugter Ausführungsform wird als Komponente f) wenigstens ein Flammschutzmittel eingesetzt. Bevorzugte **Flammschutzmittel** sind verschiedene mineralische Flammschutzmittel, stickstoffhaltige Flammschutzmittel oder phosphorhaltige Flammschutzmittel.

Unter den als Komponente f) einzusetzenden mineralischen Flammschutzmitteln ist Magnesiumhydroxid besonders bevorzugt. Magnesiumhydroxid [CAS No. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine vor Verarbeitung zur Formmasse mittels Laserdiffraktometrie gemäß **ISO 13320** zu bestimmende mittlere Teilchengröße d50 im Bereich von 0,5 μm bis 6 μm, wobei ein d50 im Bereich von 0,7 μm bis 3,8 μm bevorzugt und ein d50 im Bereich von 1,0 μm bis 2,6 μm besonders bevorzugt ist.

Erfindungsgemäß bevorzugte mineralische Flammschutzmittel sind Magnesiumhydroxidtypen, insbesondere Magnifin® H5IV der Martinswerk GmbH, Bergheim, Deutschland oder Hidromag® Q2015 TC der Firma Penoles, Mexiko-Stadt, Mexico.

Bevorzugte, als Komponente f) einzusetzende stickstoffhaltige Flammschutzmittel sind die Reaktionsprodukte aus Trichlortriazin, Piperazin und Morpholin gemäß CAS No. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente f) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente f) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte, als Komponente f) einzusetzende phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melaminpoly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente f) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente f) einzusetzenden Flammschutzmittel können in Reinform, sowie über Masterbatche oder Kompaktate der Komponente a) zugesetzt werden.

In einer alternativen Ausführungsform können als Komponente f) Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung hinsichtlich einer Gefahrenklassifizierung nach H351 - auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente f) einzusetzenden Flammschutzmitteln sind Aluminiumtris(diethylphosphinat)] [CAS No. 225789-38-8] sowie die Kombination aus Aluminiumtris(diethylphosphinat) und Melaminpolyphosphat oder die Kombination aus Aluminiumtris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminiumtris(diethylphosphinat) bevorzugt im Bereich von 40 bis 90 Massenanteilen, besonders bevorzugt im Bereich von 50 bis 80 Massenanteilen, ganz besonders bevorzugt im Bereich von 60 bis 70 Massenanteilen, jeweils bezogen auf 100 Massenanteile der Kombination aus Aluminiumtris(diethylphosphinat) und Melaminpolyphosphat bzw. der Kombination aus Aluminiumtris(diethylphosphinat) und mindestens einem Aluminiumsalz der Phosphonsäure.

Das als Komponente f) insbesondere bevorzugt einzusetzende Aluminiumtris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70

der Fa. BASF, Ludwigshafen, Deutschland sowie Budit® 3141 der Fa. Budenheim, Budenheim, Deutschland.

Bevorzugte, als Komponente f) einzusetzende Aluminiumsalze der Phosphonsäure sind auszuwählen aus der Gruppe

primäres Aluminiumphosphonat $[Al(H_2PO_3)_3]$,

basisches Aluminiumphosphonat $[Al(OPH)H_2PO_3)_2 \cdot H_2O]$,

$Al_2(HPO_3)_3 \cdot x\ Al_2O_3 \cdot nH_2O$ mit x im Bereich von 2,27 bis 1 und n im Bereich von 0 bis 4,

$Al_2(HPO_3)_3 \cdot (H_2O)_q$ der Formel (IX) mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$Al_2M_z(HPO_3)_y(OH)_v \cdot (H_2O)_w$ der Formel (X) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der Formel (XI), worin u im Bereich von 2 bis 2,99, t im Bereich von 2 bis 0,01 und s im Bereich von 0 bis 4 liegt,

wobei in Formel (X) z, y und v sowie in Formel (XI) u und t nur solche Zahlen annehmen können, dass das entsprechende Aluminiumsalz der Phosphonsäure als Ganzes ungeladen ist.

Bevorzugte Alkalimetalle M in Formel (X) sind Natrium und Kalium.

Die beschriebenen Aluminiumsalze der Phosphonsäure können dabei einzeln oder im Gemisch eingesetzt werden.

Besonders bevorzugte als Komponente f) einzusetzende Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OPH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \bullet xAl_2O_3 \bullet nH_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS No. 71449-76-8] und sekundäres Aluminiumphosphonattetrahydrat $Al_2(HPO_3)_3 \cdot 4H_2O$ [CAS No. 156024-71-4], insbesondere bevorzugt ist sekundäres Aluminiumphosphonat $Al_2(HPO_3)_3$.

Die Herstellung erfindungsgemäß als Komponente f) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

**Komponente g)**

Als Komponente g) wird wenigstens ein weiteres, von den Komponenten b) c), d), e) und f) verschiedenes **Additiv** eingesetzt. Bevorzugte als Komponente g) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Gleit- und/oder Entformungsmittel, Komponenten zur Verringerung der Wasseraufnahme, Fließhilfsmittel, kettenverlängernd wirkende Additive Farbmittel oder Laserabsorber. Die Additive können alleine oder in Mischung bzw. in Form von Masterbatchen eingesetzt werden.

Bevorzugte **Thermostabilisatoren** der Komponente g) sind von Komponente b) verschiedene sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

Als Komponente g) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente a) eingesetzt.

Als Komponente g) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Als Komponente g) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente g) einzusetzende **Farbmittel** werden in einer Ausführungsform bevorzugt anorganische Pigmente eingesetzt, besonders bevorzugt Ultramarinblau, Bismutvanadat [CAS No. 14059-33-7], Eisenoxid [CAS No. 1309-37-1], Titandioxid [CAS No. 13463-67-7 (Rutil) oder CAS No. 1317-70-0 (Anatas)], Bariumsulfat [CAS No. 7727-43-7], Zinksulfid [CAS No. 1314-98-3] oder Sulfide enthaltend Cer. Bevorzugte Sulfide enthaltend Cer sind Cer(III)sulfid (Ce2S3) [CAS-No. 12014-93-6], auch bekannt als C.I.Pigment Orange 75, oder Cer(III)sulfid / Lanthan(III)sulfid (Ce2S3 / La2S3) [CAS-No. 12014-93-6 ; CAS-No. 12031-49-1] auch bekannt als C.I. Pigment Orange 78. Insbesondere bevorzugt ist Bariumsulfat. Insbesondere bevorzugt ist auch Titandioxid, auch als Pigment White 6 oder CI 77891 bezeichnet.

Erfindungsgemäß ebenfalls als Komponente g) einzusetzende **Farbmittel** sind vorzugsweise auch Pigmentsysteme auf Basis anorganischer Mischoxide enthaltend Titandioxid, Zinnoxid und Zinkoxid. Ein als Komponente g) erfindungsgemäß bevorzugt einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Der Inhalt der EP 0 113 229 B1 wird von der vorliegenden Beschreibung vollumfänglich umfasst. Gemäß EP 0 113 229 B1 werden die Mengenverhältnisse der Zinn-, Titan-, Zink- und Sauerstoffanteile in einem erfindungsgemäß als Komponente g) einzusetzenden Pigmentsystem vorzugsweise durch die allgemeine Formel (XII) wiedergegeben

$$(TiO_2)_cSnO(ZnO)_d(SnO)_e, \qquad (XII)$$

worin c im Bereich von 0,3 bis 6,2 liegt, d im Bereich von 0,04 bis 6,2 liegt und e im Bereich von 0 bis 7 liegt.

Vorzugsweise enthält ein als Komponente g) einzusetzendes Pigmentsystem der allgemeinen Formel (XII) 300 bis 6000 Atomteile Alkalimetallreste pro Million Atomteile des gesamten Komplexes bzw. Pigmentsystems. Ein als Komponente g) einzusetzendes Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden.

Insbesondere bevorzugt ist ein Pigmentsystem der allgemeinen Formel (II) der CAS-Nr. 923954-49-8, oder C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe: **https://de.wikipedia.org/wiki/Colour_Index.** Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Als Komponente g) einzusetzende weitere **Farbmittel** werden in einer Ausführungsform bevorzugt organische Farbmittel eingesetzt, besonders bevorzugt Phthalocyanine, Chinacridone, Benzimidazole, insbesondere Ni-2-hydroxynapthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] und Phthaloperine, insbesondere 10,10'-Oxy-bis-12H-phthaloperin-12-on [CAS Nr. 203576-97-0] und 12H-Phthaloperin-12-on [CAS Nr. 6925-69-5], wobei 10,10'-Oxy-bis-12H-phthaloperin-12-on insbesondere bevorzugt ist.

In einer alternativen Ausführungsform können - sofern es der Bedarf erfordert - auch Ruß oder Nigrosin als Farbmittel der Komponente f) eingesetzt werden.

In einer besonders bevorzugten Ausführungsform werden die Farbmittel erfindungsgemäß so eingesetzt, dass die farbstabilen, schlagzähen Polyamid basierten Erzeugnisse "orange" eingefärbt sind, wobei Farbtöne, die im RAL-Farbsystem "ähnlich" zu denen der Farbnummern RAL2001, RAL2003, RAL2004, RAL2007, RAL2008, RAL2009, RAL2010 und RAL2011 sind, bevorzugt sind und solche Farbtöne die "ähnlich" zu den Farbnummern RAL2003, RAL2008 und RAL2011 sind, ganz besonders bevorzugt sind.

Unter "orange" wird erfindungsgemäß ein Farbton verstanden, der "ähnlich" zu einem Farbton einer mit "2" beginnenden Farbnummer der RAL-Farbtabelle ist. "Ähnliche" Farbtöne sind dabei erfindungsgemäß solche, deren Farbabstand im L*a*b*-System einen $\Delta$ E von <20, bevorzugt ein $\Delta E$ <10, besonders bevorzugt $\Delta E$ <5 zu der Farbe der RAL-Farbtabelle aufweisen. Zur Erläuterung des in **EN ISO 11664-4** definierten $\Delta E$ siehe beispielsweise: **https://de.wikipedia.org/wiki/Delta_E.**

Als Komponente g) einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert **(http://de.wikipedia.org/wiki/Talkum).** Erfindungsgemäß einzusetzendes Talkum kann beispielsweise als Mistron® R10 von Imerys Talc Group, Toulouse, Frankreich (Rio Tinto Group) bezogen werden.

Als Komponente g) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäßen Polymerzusammensetzungen vor allem Copolymerisate geeignet, die einen MFI-Wert gemessen bei 190°C und einer Belastung von 2,16 kg von mindestens 100g/10min, bevorzugt von mindestens 150g/10min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente g) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS No. 98460-24-3] oder epoxidierte Fettsäureester des Glycerins, sowie auch ganz besonders bevorzugt epoxidiertes Sojaöl [CAS No. 8013-07-8] und/oder epoxidiertes Leinöl.

Bevorzugt als Komponente g) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als Komponente g) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente g) einzusetzende Gleit- und/oder Entformungsmittel sind auszuwählen aus der Gruppe Pentaerythritoltetrastearat [CAS No. 115-83-3], Ethylen-bis-stearylamid, Zinkstearat, Calciumstearat und Ethylenglycoldimontanat. Insbesondere bevorzugt wird Zinkstearat [CAS No. 557-05-1], Calciumstearat [CAS No. 1592-23-0] oder Ethylen-bis-stearylamid [CAS No. 110-30-5] eingesetzt. Insbesondere besonders bevorzugt wird Zinkstearat [CAS No. 557-05-1] eingesetzt.

Als Komponente g) bevorzugt einzusetzende **Hydrolysestabilisatoren bzw. Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente g) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid, Zinn und/oder Antimonoxid dotierte Glimmer und Antrachinon. Besonders bevorzugt ist Zinnoxid.

In einer alternativen Ausführungsform kann als Laserabsorber aber auch - sofern der Bedarf es erfordert unter Berücksichtigung der Nachteile hinsichtlich einer Gefahrenklassifizierung H351 - auch Antimonzinnoxid, Antimontrioxid

oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden. Laserabsorber können Laserlicht einer bestimmten Wellenlänge absorbieren. In der Praxis liegt diese Wellenlänge im Bereich von 157 nm bis 10,6 μm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

Insbesondere ganz besonders bevorzugt betrifft die vorliegende Erfindung **Zusammensetzungen** und daraus herzustellende **Erzeugnisse** enthaltend

a) wenigstens ein Polyamid, vorzugsweise Polyamid 6 oder Polyamid 66,
b) wenigstens ein sterisch gehindertes Phenol der allgemeinen Formel (II)

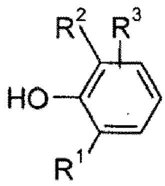

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,
c) wenigstens ein Phosphinsäurederivat der allgemeinen Formel (I),

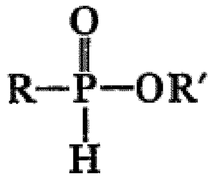

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat der allgemeinen Formel (VI),

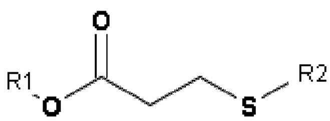

1. (VI)

e) worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht. wenigstens Glasfasern,

mit der Maßgabe, dass auf 38 bis 85 Gew.-%, vorzugsweise 65 bis 70 Gew.-% der Komponente a)
0,1 bis 0,3 Gew.-% der Komponente b),
0,3 bis 1 Gew.-% der Komponente c),
0,2 bis 0,6 Gew.-% der Komponente d) und
15 bis 60 Gew.-%, vorzugsweise 25 bis 34,4 Gew.-% der Komponente e) eingesetzt werden und dass die Summe aller

Gewichtsprozente stets 100 ergibt.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Insbesondere ganz besonders bevorzugt betrifft die vorliegende Erfindung **Zusammensetzungen** und daraus herzustellende **Erzeugnisse** enthaltend

a) wenigstens ein Polyamid, vorzugsweise Polyamid 6 oder Polyamid 66,
b) wenigstens 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,
c) wenigstens Natriumhypophosphit,
d) wenigstens Pentaerythrityl tetrakis (3-dodecylthiopropionat) und
e) wenigstens Glasfasern

mit der Maßgabe, dass auf 38 bis 85 Gew.-%, vorzugsweise 65 bis 70 Gew.-% der Komponente a)
0,1 bis 0,3 Gew.-% der Komponente b),
0,3 bis 1 Gew.-% der Komponente c),
0,2 bis 0,6 Gew.-% der Komponente d) und
15 bis 60 Gew.-%, vorzugsweise 25 bis 34,4 Gew.-% der Komponente e) eingesetzt werden und dass die Summe aller Gewichtsprozente stets 100 ergibt.

**Bevorzugte Verwendungen**

Die Erfindung betrifft zudem die Verwendung der Komponenten

b) wenigstens ein sterisch gehindertes Phenol der allgemeinen Formel (II)

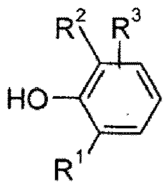

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens eine Phosphinsäurederivat der allgemeinen Formel (I),

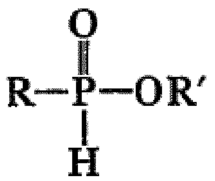

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat der allgemeinen Formel (VI),

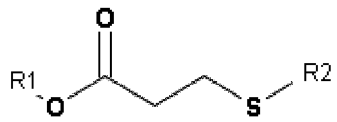

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,,

zur Herstellung Polyamid basierter Erzeugnisse mit geringer Änderung des Helligkeitswertes |ΔL*| berechnet gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf 100 Massenanteile wenigstens eines als Komponente a) einzusetzenden Polyamids 0,03 bis 3 Massenanteile der Komponente b), 0,05 bis 5 Massenanteile der Komponente c) und 0,05 bis 5 Massenanteile der Komponente d) eingesetzt werden.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Unter einem guten Alterungsverhalten in Form eines verbesserten Farberhalts bzw. einer verbesserten Farbstabilität nach Heißluftalterung wird erfindungsgemäß verstanden, dass die Änderung des Helligkeitswertes |ΔL*| berechnet gemäß **DIN EN ISO 11664-4** nach Heißluftlagerung über 1000h bei 150°C gering ausfällt, vorzugsweise die Änderung des Helligkeitswertes im Bereich von |ΔL*| = 0 bis |ΔL*| = 30 liegt, besonders bevorzugt die Änderung des Helligkeitswertes im Bereich von |ΔL*| = 0 bis |ΔL*| = 25 liegt.

Unter einem guten Alterungsverhalten in Form eines ausreichenden Erhalts der Schlagzähigkeit nach Heißluftalterung wird erfindungsgemäß verstanden, dass die Schlagzähigkeit gemessen nach **ISO180-1U** nach Heißluftalterung über 500h bei 140°C nicht mehr als 30% im Vergleich zum Zeitpunkt bei 0 h abfällt.

Die Erfindung betrifft ferner vorzugsweise die **Verwendung** der Komponenten

b) wenigstens ein **sterisch gehindertes Phenol** der allgemeinen Formel (II)

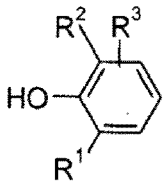

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, vorzugsweise 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) wenigstens ein Phosphinsäurederivat der allgemeinen Formel (I),

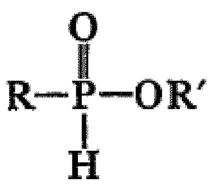

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, vorzugsweise Natriumhypophosphit, und

d) wenigstens ein 3-Thiopropionat der allgemeinen Formel (VII),

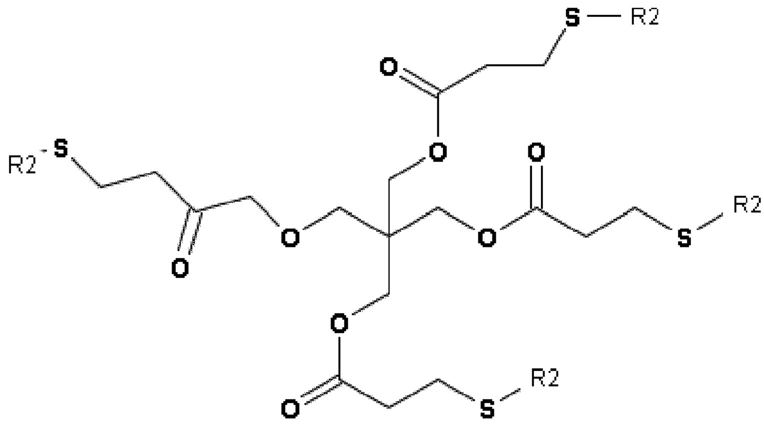

(VII)

worin R2 für einen Alkylrest mit 4 bis 20 Kohlenstoffatomen steht, vorzugsweise Pentaerythrityltetrakis(3-dodecylthiopropionat), zur Herstellung Polyamid basierter Erzeugnisse mit geringer Änderung des Helligkeitswertes |ΔL*| berechnet gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf 100 Massenanteile wenigstens eines als Komponente a) einzusetzenden Polyamids, vorzugsweise Polyamid 6 oder Polyamid 66, 0,03 bis 3 Massenanteile der Komponente b), 0,05 bis 5 Massenanteile der Komponente c) und 0,05 bis 5 Massenanteile der Komponente d) eingesetzt werden.

Die Erfindung betrifft ferner vorzugsweise die **Verwendung** von Mischungen enthaltend

b) wenigstens ein sterisch gehindertes Phenol der allgemeinen Formel (II)

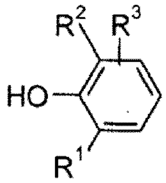

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens ein Phosphinsäurederivat der allgemeinen Formel (I),

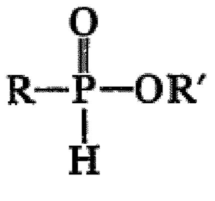

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

d) wenigstens ein 3-Thiopropionat der allgemeinen Formel (VI),

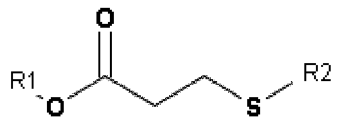

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht., und

e) wenigstens Glasfasern

zur Herstellung Polyamid basierter Erzeugnisse mit geringer Änderung des Helligkeitswertes |ΔL*| gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf 100 Massenanteile wenigstens eines als Komponente a) einzusetzenden Polyamids, vorzugsweise Polyamid 6 oder Polyamid 66, 0,03 bis 3 Massenanteile der Komponente b), 0,05 bis 5 Massenanteile der Komponente c) und 0,05 bis 5 Massenanteile der Komponente d) und 5 bis 185 Massenanteile der Komponente e) eingesetzt werden.

Die Erfindung betrifft ferner vorzugsweise die **Verwendung** von der Komponenten

b) wenigstens 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,
c) wenigstens Natriumhypophosphit und
d) wenigstens Pentaerythrityl tetrakis (3-dodecylthiopropionat)

zur Herstellung Polyamid basierter Erzeugnisse mit geringer Änderung des Helligkeitswertes |ΔL*| berechnet gemäß **DIN EN ISO 11664-4** nach Heißluftlagerung über 1000h bei 150°C und Erhalt der Schlagzähigkeit gemessen nach **ISO180-1U** nach Heißluftalterung über 500h bei 140°C mit der Maßgabe, dass auf 38 bis 85 Gew.-%, vorzugsweise 65 bis 70 Gew.-% wenigstens eines Polyamids, vorzugsweise Polyamid 6 oder Polyamid 66, 0,1 bis 0,3 Gew.-% der Komponente b), 0,3 bis 1 Gew.-% der Komponente c), 0,2 bis 0,6 Gew.-% der Komponente d) und 15 bis 60 gew.-%, vorzugsweise 25 bis 34,4 Gew.-% der als Komponente e) einzusetzenden Glasfasern eingesetzt werden und dass die Summe aller Gewichtsprozente stets 100 ergibt.

## Bevorzugte Verfahren

Die Erfindung betrifft schließlich ein **Verfahren** zur Verringerung eines Helligkeitswertverlusts |ΔL*| berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) wenigstens ein sterisch gehindertes Phenol der allgemeinen Formel (II)

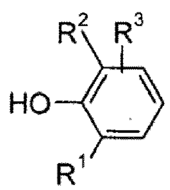

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) wenigstens eine Phosphinsäurederivat der allgemeinen Formel (I),

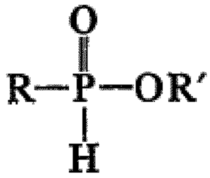

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) wenigstens ein 3-Thiopropionat der allgemeinen Formel (VI),

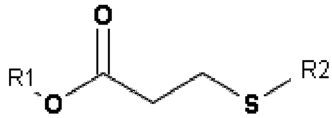

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht" auf 100 Massenanteile eines als Komponente a) einzusetzenden Polyamids, vorzugsweise Polyamid 6 oder Polyamid 66, einsetzt.

Das Ammonium-Ion $NH_4^+$ für R' ist ein Kation, das mit Anionen ähnlich wie Alkalimetalllonen Salze bildet. Es ist die konjugierte Säure zur Base Ammoniak ($NH_3$).

Die Erfindung betrifft ferner ein **Verfahren** zur Verringerung eines Helligkeitswertverlusts |ΔL*| berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) wenigstens ein **sterisch gehindertes Phenol** der allgemeinen Formel (II)

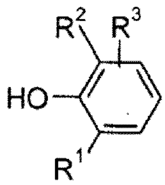

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, vorzugsweise 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) wenigstens eine Phosphinsäurederivat der allgemeinen Formel (I),

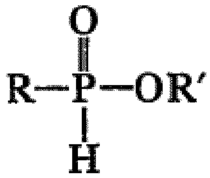

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, vorzugsweise Natriumhypophosphit, und

d) wenigstens ein 3-Thiopropionat der allgemeinen Formel (VII),

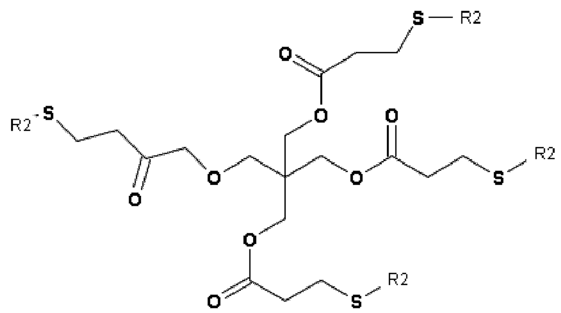

(VII)

worin R2 für einen Alkylrest mit 4 bis 20 Kohlenstoffatomen steht, vorzugsweise Pentaerythrityltetrakis(3-dodecylthiopropionat), auf 100 Massenanteile eines als Komponente a) einzusetzenden Polyamids, vorzugsweise Polyamid 6 oder Polyamid 66, einsetzt.

Die Erfindung betrifft zudem ein **Verfahren** zur Verringerung eines Helligkeitswertverlusts |ΔL*| berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) 0,1 bis 0,3 Gew.-% wenigstens eines sterisch gehinderten Phenols der allgemeinen Formel (II)

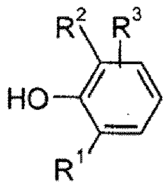

(II)

worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht,

c) 0,3 bis 1 Gew.-% wenigstens eines Phosphinsäurederivats der allgemeinen Formel (I),

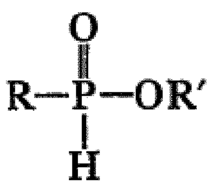

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,2 bis 0,6 Gew.-% wenigstens eines 3-Thiopropionats der allgemeinen Formel (VI),

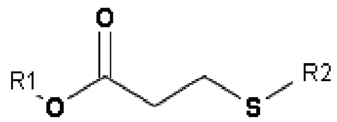

(VI)

worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht,

auf 38 bis 85 Gew.-%, vorzugsweise 65 bis 70 Gew.-% wenigstens eines als Komponente a) einzusetzenden Polyamids, vorzugsweise Polyamid 6 oder Polyamid 66, und 15 bis 60 Gew.-%, vorzugsweise 25 bis 34,4 Gew.-% als Komponente e) einzusetzender Glasfasern einsetzt und die Summe aller Gewichtsprozente stets 100 ergibt.

Die Erfindung betrifft schließlich ein **Verfahren** zur Verringerung eines Helligkeitswertverlusts |ΔL*| berechnet gemäß **DIN EN ISO 11664-4** über 1000h bei 150°C sowie Erhalt der nach **ISO180-1U** zu bestimmenden Schlagzähigkeit nach Heißluftalterung über 500h bei 140°C, indem man Mischungen enthaltend

b) 0,1 bis 0,3 Gew.-% wenigstens 3,9-Bis[2-[3-(3-tert-butyl-4-hydroxy-5-methylphenyl)-propionyloxy]-1,1-dimethylethyl]-2,4,8,10-tetraoxaspiro-[5.5]undecan,

c) 0,3 bis 1 Gew.-% wenigstens Natriumhypophosphit, und

d) 0,2 bis 0,6 Gew.-% wenigstens Pentaerythrityl tetrakis (3-dodecylthiopropionat),

auf 38 bis 85 Gew.-%, vorzugsweise 65 bis 70 Gew.-% wenigstens eines als Komponente a) einzusetzenden Polyamids, vorzugsweise Polyamid 6 oder Polyamid 66, und 15 bis 60 Gew.-%, vorzugsweise 25 bis 34,4 Gew.-% als Komponente e) einzusetzender Glasfasern einsetzt und die Summe aller Gewichtsprozente stets 100 ergibt.

Gegenstand der vorliegenden Anmeldung ist auch die **Verwendung bzw. Verarbeitung** der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen, insbesondere mittels Spritzguss.

Erfindungsgemäße Verarbeitungsverfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge **(http://de.wikipedia.org/wiki/Extrusion_(Verfahrenstechnik).** Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,

2. Extrusion des thermoplastischen Schmelzestrangs durch eine Kalibrierhülse, die den Querschnitt des zu extrudierenden Profils aufweist,

3. Abkühlung des extrudierten Profils in einem Kalibriertisch,

4. Weitertransport des Profils mit einem Abzug hinter dem Kalibriertisch,

5. Ablängen des zuvor endlosen Profils in einer Schneideanlage,

6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384**.**

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser-Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer wenigstens zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäß einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder, gegenläufiger Doppelschneckenextruder und gleichläufiger Doppelschneckenextruder .

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b), c) und d) sowie gegebenenfalls e) und gegebenenfalls f) enthaltenden Formmassen.

Die Zubereitung erfindungsgemäß einzusetzender Zusammensetzungen für die Herstellung von im Spritzguss, in der Extrusion oder zum Blasformen einzusetzender Formmassen erfolgt durch Mischen der einzelnen Komponenten

a), b), c) und d) sowie gegebenenfalls weiterer Komponenten in wenigstens einem Mischaggregat, vorzugsweise einem Compounder, besonders bevorzugt einem gleichsinnig drehenden Zweiwellenextruder. Durch diesen Mischvorgang, auch als Compoundieren bezeichnet, werden als Zwischenprodukte Formmassen erhalten, die in Form von Pulvern, Granulaten oder in Strangform einer weiteren Verarbeitung zur Verfügung gestellt werden. Diese Formmassen - auch als thermoplastische Formmassen bezeichnet - können entweder ausschließlich aus den Komponenten a), b), c) und d) bestehen, oder ggf. weitere Komponenten, vorzugsweise e) und/oder f) enthalten.

Die vorliegende Erfindung betrifft schließlich auch die Verwendung der durch Extrusion oder Spritzguss aus Formmassen, enthaltend wenigstens die Komponenten a), b), c) und d) sowie ggf. e) und ggf. f) hergestellten Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine Langzeitfarbstabilität erforderlich ist. Bevorzugt für derartige Anwendungen ist die Verwendung für Formteile in der Elektrotechnik und in Fahrzeugen, insbesondere Hochvoltkomponenten in Fahrzeugen, insbesondere in Kraftfahrzeugen (KFZ).

Die vorliegende Erfindung betrifft deshalb auch die Verwendung der erfindungsgemäßen thermoplastischen Formmassen zur Herstellung von Formteilen und Halbzeugen und wiederum daraus herzustellender Erzeugnisse, bevorzugt von Formteilen für Fahrzeuge, insbesondere in Form von Hochvoltkomponenten.

## Beispiele

Zum Nachweis der erfindungsgemäß beschriebenen Verbesserungen der Eigenschaften wurden zunächst durch Compoundierung entsprechende Polyamid basierte Zusammensetzungen bzw. Formmassen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen im Bereich von 270 und 300°C gemischt, als Strang ausgetragen, bis zur Granulierbarkeit abgekühlt und granuliert. Nach dem Trocknen, in der Regel zwei Tage bei 80°C im Vakuumtrockenschrank, erfolgte die Verarbeitung des Granulats bei Temperaturen im Bereich von 270 bis 290°C zu Normprüfkörpern für die jeweiligen Prüfungen.

Die Schlagzähigkeit nach **ISO 180-1U** (Izod) wurde an spritzgegossenen nach **DIN EN ISO 1874-2** festgelegten Prüfkörpern im spritzfrischen Zustand bei 23°C bestimmt. Der spritzfrische Zustand, auch "dry as moulded", wird in der **DIN EN ISO 1874-2** definiert.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Verfärbung von Polymer basierten Erzeugnisses durch die oxidative Schädigung der Polymermatrix kann durch die Veränderung der Helligkeit L* über die Lagerungszeit bei hoher Temperatur bestimmt werden.

Im Rahmen der vorliegenden Erfindung erfolgte die Prüfung des Alterungsverhaltens in Form eines verbesserten Farberhalts bzw. einer verbesserten Farbstabilität durch Lagerung von spritzgegossenen Platten von 60mm • 40mm • 4mm in einem Materialprüfschrank des Modells Binder FP115 bei Umluft bei Temperaturen von 150°C, im Rahmen der vorliegenden Erfindung auch als Heißluftalterung bezeichnet. Als Maß für die Verfärbung wird bzw. wurde die Differenz $\Delta L^*$ des Helligkeitswertes L* von spritzgegossenen Erzeugnissen auf Basis erfindungsgemäßer Polymerzusammensetzungen nach Heißluftalterung über 1000 Stunden $L^*_{1000}$ und vor der Heißluftalterung $L^*_0$ gemessen und der Betrag über die Differenz gebildet, um die Änderung in positiven Zahlen auszudrücken.

$$|\Delta L^*| = |L^*_{1000} - L^*_0|$$

Somit zeichnet sich erfindungsgemäß ein gutes Alterungsverhalten in Form eines verbesserten Farberhalts bzw. einer verbesserten Farbstabilität nach Heißluftalterung dadurch aus, dass der Betrag der Änderung des Helligkeitswertes $|\Delta L^*|$ kleiner ausfällt. Der Helligkeitswert L* der Proben wurde an plattenförmigen Prüfkörpern der Größe 60•40•4 $mm^3$ bestimmt und nach **DIN EN ISO 11664-4** berechnet. Die Farbmessung erfolgte dabei mit dem Spektralfotometer CM-2600d der Fa. Konica Minolta mit der CIE-Normlichtart D65 in Reflektion (10° Beobachterwinkel) mit

Glanzeinschluss (SCI=Specular Component Included) .

Im Rahmen der vorliegenden Erfindung erfolgte die Prüfung des Alterungsverhaltens in Form eines Erhalts der Schlagzähigkeit durch Lagerung von spritzgegossenen, nach **DIN EN ISO 1874-2** festgelegten Prüfkörpern in einem Materialprüfschrank des Modells Binder FP115 bei Umluft bei Temperaturen von 140°C. Die Schlagzähigkeit wurde gemäß **ISO 180-1U** bei 23°C an diesen Probekörpern nach Lagerung über 500 h bei 140°C bestimmt.

**Edukte:**

Komponente a) Polyamid 6 (Durethan® B29, Fa. Lanxess Deutschland GmbH)

Komponente b) 3,9-Bis[2-[3-(3-tert-butyl-4-hydroxy-5-methylphenyl)-propionyloxy]-1,1-dimethylethyl]-2,4,8,10-tetraoxaspiro-[5.5]undecan, CAS No. 90498-90-1, (Sumilizer® GA-80, Fa. Sumitomo Chemical)

Komponente c) Natriumhypophosphit wasserfrei CAS No. 7681-53-0 (Sigma Aldrich, extra pure)

Komponente d) Pentaerythrityl tetrakis (3-dodecylthiopropionat), CAS No. 29598-76-3 (Sumilizer® TP-D, Fa. Sumitomo Chemical)

Komponente e) Glasfaser (CS7928, Fa. Lanxess Deutschland GmbH)

Komponente f) Ethylen-Copolymer Schlagzähmodifikator (Exxelor® VA1801, Exxon Mobil)

**Tab. 1:**

| | | Bsp.1 | Vgl.1 | Vgl.2 |
|---|---|---|---|---|
| Komponente a) | Gew. % | 68,9 | 70 | 60 |
| Komponente b) | Gew. % | 0,2 | 0 | 0 |
| Komponente c) | Gew. % | 0,5 | 0 | 0 |
| Komponente d) | Gew. % | 0,4 | 0 | 0 |
| Komponente e) | Gew. % | 30 | 30 | 30 |
| Komponente f) | Gew. % | 0 | 0 | 10 |
| Betrag der Differenz des Helligkeitswert $\|\Delta L^*\|$ nach Heißluftalterung 1000 h, 150 °C | | 22 | 35 | 40 |
| E-Modul, ISO 527-1,-2 | MPa | 9400 | 9200 | 8500 |
| Schlagzähigkeit, ISO180-1 U, 23°C | $kJ/m^2$ | 83 | 74 | 75 |
| Schlagzähigkeit, ISO180-1 U, 23°C, nach Heißluftalterung über 500h bei 140 °C | $kJ/m^2$ | 81 | 41 | 45 |

Die Ergebnisse in **Tab. 1** zeigen, dass die erfindungsgemäß einzusetzende Mischung der Komponenten b), c), d) in glasfaserverstärkten Polyamid 6 basierten Erzeugnissen gemäß Beispiel 1 im Vergleich zu Vergleichsbeispiel 1, in welchem kein Schlagzähmodifikator eingesetzt wird, überraschenderweise eine höhere Schlagzähigkeit aufweiste. Zudem zeigte sich überraschenderweise nicht nur ein verbessertes Alterungsverhalten in Form eines verbesserten Farberhaltes bzw. einer verbesserten Farbstabilität nach Heißluftalterung über 1000h bei 150°C mit $|\Delta L^*|$ im Bereich zwischen $|\Delta L^*| = 0$ und $|\Delta L^*| = 25$ im Vergleich zu den Vergleichsbeispielen 1 und 2, sondern zudem auch ein Erhalt der Schlagzähigkeit nach Heißluftalterung über 500h bei 140°C und diese lediglich um 2 % abfällt. Auch der E-Modul

der erfindungsgemäßen Zusammensetzung aus Beispiel 1 war höher im Vergleich zu beiden Vergleichsbeispielen 1 und 2.

## Patentansprüche

1. Zusammensetzungen sowie darauf basierende Erzeugnisse enthaltend

   a) wenigstens ein Polyamid,
   b) wenigstens ein sterisch gehindertes Phenol,
   c) wenigstens ein Phosphinsäurederivat der allgemeinen Formel (I),

   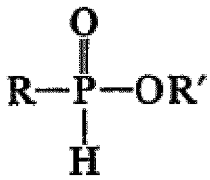

   (I)

   worin R für ein Wasserstoffatom oder für eine Alkyl-, Cycloalkyl- oder Aryl-Gruppe steht, und
   R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und
   d) wenigstens ein 3-Thiopropionat,

   mit der Maßgabe, dass auf 100 Massenanteile der Komponente a)
   0,03 bis 3 Massenanteile der Komponente b),
   0,05 bis 5 Massenanteile der Komponente c) und
   0,05 bis 5 Massenanteile der Komponente d) eingesetzt werden.

2. Zusammensetzungen sowie darauf basierende Erzeugnisse gemäß Anspruch 1, **dadurch gekennzeichnet, dass** diese zusätzlich als Komponente e) wenigstens einen Füllstoff oder Verstärkungsstoff enthalten mit der Maßgabe, dass auf 100 Massenanteile der Komponente a) 5 bis 185 Massenanteile, bevorzugt 5 bis 100 Massenanteile, der Komponente e) eingesetzt werden.

3. Zusammensetzungen sowie darauf basierende Erzeugnisse gemäß Anspruch 2, **dadurch gekennzeichnet, dass** als Verstärkungsstoff Glasfasern eingesetzt werden.

4. Zusammensetzungen sowie darauf basierende Erzeugnisse gemäß einem oder mehreren der Ansprüche 1 bis 3, **dadurch gekennzeichnet, dass** diese zusätzlich zu den Komponenten a), b), c), d) und e) oder anstelle von e) noch wenigstens ein Flammschutzmittel f) zu 3 bis 100 Massenanteilen, bevorzugt zu 5 bis 80 Massenanteilen, besonders bevorzugt zu 10 bis 50 Massenanteilen, jeweils bezogen auf 100 Massenanteile der Komponente a) enthalten.

5. Zusammensetzungen sowie darauf basierende Erzeugnisse gemäß einem oder mehreren der Ansprüche 1 bis 4, **dadurch gekennzeichnet, dass** diese zusätzlich zu den Komponenten a), b), c), d) und e) oder anstelle von e) und/oder f) noch wenigstens ein von den Komponenten b), c), d), e) und f) verschiedenes Additiv g) zu 0,01 bis 80 Massenanteilen, bevorzugt zu 0,05 bis 50 Massenanteilen, besonders bevorzugt zu 0,1 bis 30 Massenanteilen, jeweils bezogen auf 100 Massenanteile der Komponente a) enthalten.

6. Zusammensetzungen sowie darauf basierende Erzeugnisse gemäß einem oder mehreren der Ansprüche 1 bis 5, **dadurch gekennzeichnet, dass** als Polyamid Polyamid 6 oder Polyamid 66 eingesetzt werden.

7. Zusammensetzungen sowie darauf basierende Erzeugnisse gemäß einem oder mehreren der Ansprüche 1 bis 6, **dadurch gekennzeichnet, dass** als Komponente b) sterisch gehinderte Phenole der allgemeinen Formel (II),

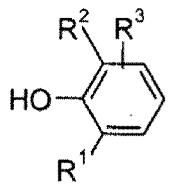

(II)

eingesetzt werden, worin $R^1$ für eine tert-Butylgruppe, $R^2$ für eine Alkylgruppe mit 1 bis 9 Kohlenstoffatomen steht und $R^3$ für eine Alkylgruppe, für eine substituierte Alkylgruppe, für eine Alkoxygruppe oder für eine substituierte Aminogruppe steht, oder worin

$R^1$ und $R^2$ jeweils für eine tert-Butylgruppe stehen und $R^3$ für eine Alkylgruppe, für eine substituierte Alkylgruppe, für eine Alkoxygruppe oder für eine substituierte Aminogruppe steht, oder worin

$R^1$ für eine Methylgruppe steht und $R^2$ für eine substituierte Alkylgruppe und $R^3$ für eine Alkylgruppe, für eine substituierte Alkylgruppe, für eine Alkoxygruppe oder für eine substituierte Aminogruppe steht, oder worin.

$R^1$ für eine Methylgruppe steht und $R^2$ für eine tert-Butylgruppe steht und $R^3$ für eine Alkylgruppe, für eine substituierte Alkylgruppe, für eine Alkoxygruppe oder für eine substituierte Aminogruppe steht.

8. Zusammensetzungen sowie darauf basierende Erzeugnisse gemäß einem oder mehreren der Ansprüche 1 bis 6, **dadurch gekennzeichnet, dass** als Komponente b) sterisch gehinderte Phenole der allgemeinen Formel (III)

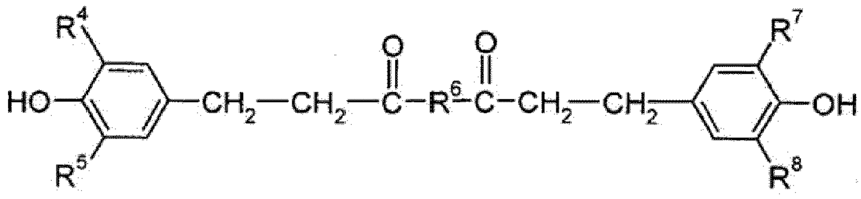

(III)

eingesetzt werden, worin $R^4$, $R^5$, $R^7$ und $R^8$ unabhängig voneinander $C_1$-$C_8$-Alkylgruppen darstellen, die ihrerseits substituiert sein können und wovon mindestens eine davon eine sterisch anspruchsvolle Gruppe ist, und $R^6$ ein verbrückendes Diamin, bevorzugt Ethylendiamin oder Hexamethylendiamin, ein Diol, bevorzugt Glycol, Hexandiol oder ein Ethylenglycololigomer darstellt.

9. Zusammensetzungen sowie darauf basierende Erzeugnisse gemäß einem oder mehreren der Ansprüche 1 bis 6, **dadurch gekennzeichnet, dass** als Komponente b) sterisch gehinderte Phenole der allgemeinen Formel (IV)

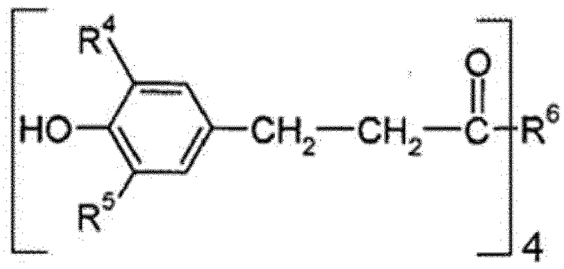

(IV)

eingesetzt werden, worin $R^4$, $R^5$ unabhängig voneinander $C_1$-$C_8$-Alkylgruppen darstellen, die ihrerseits substituiert sein können und wovon mindestens eine davon eine sterisch anspruchsvolle Gruppe ist und $R^6$ für ein verbrückendes Tetraalkoholderivat, bevorzugt Pentraerythrytol, Pentaerythrytolderivat, oder für ein Tetraamin steht.

10. Zusammensetzungen sowie darauf basierende Erzeugnisse gemäß einem oder mehreren der Ansprüche 1 bis 6, **dadurch gekennzeichnet, dass** als Komponente b) sterisch gehinderte Phenole der allgemeinen Formel (V)

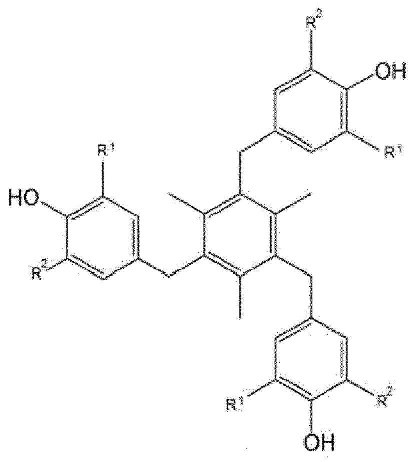

(V)

eingesetzt werden, worin $R^1$ und $R^2$ unabhängig voneinander für $C_1$-$C_8$-Alkylgruppen stehen, die ihrerseits substituiert sein können und wovon mindestens eine davon eine sterisch anspruchsvolle Gruppe ist.

**11.** Zusammensetzungen sowie darauf basierende Erzeugnisse gemäß einem oder mehreren der Ansprüche 1 bis 10, **dadurch gekennzeichnet, dass** als Komponente c) Natriumhypophosphit oder Natriumhypophosphit Monohydrat eingesetzt wird.

**12.** Zusammensetzungen sowie darauf basierende Erzeugnisse gemäß einem oder mehreren der Ansprüche 1 bis 11, **dadurch gekennzeichnet, dass** als Komponente d) 3-Thiopropionate der allgemeinen Formel (VI)

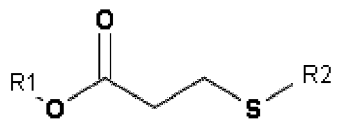

(VI)

eingesetzt werden, worin R1 für eine Alkylgruppe mit 1 bis 20 Kohlenstoffatomen oder für eine substituierte Alkylgruppe bestehend aus den Elementen Kohlenstoff, Wasserstoff, Schwefel und Sauerstoff oder optional Stickstoff mit bis zu 300 Atomen steht und R2 für einen Alkylrest mit 4 bis 20 Kohlenstoffatomen steht.

**13.** Zusammensetzungen sowie darauf basierende Erzeugnisse gemäß einem oder mehreren der Ansprüche 1 bis 11, **dadurch gekennzeichnet, dass** als Komponente d) 3-Thiopropionate der allgemeinen Formel (VII)

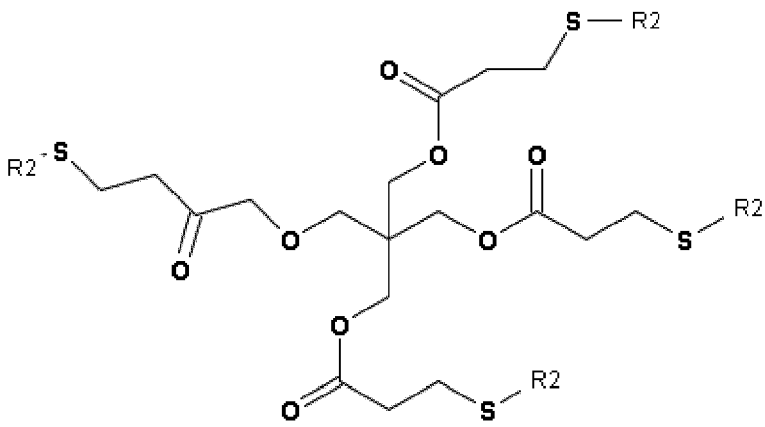

(VII)

eingesetzt werden, worin R2 für einen Alkylrest mit 4 bis 20 Kohlenstoffatomen steht und insbesondere Pentaerythrityltetrakis(3-dodecylthiopropionat) eingesetzt wird.

**14.** Verwendung von Mischungen enthaltend

a) wenigstens ein Polyamid, vorzugsweise Polyamid 6 oder Polyamid 66,
b) wenigstens ein sterisch gehindertes Phenol,
c) wenigstens ein Phosphinsäurederivat der allgemeinen Formel (I),

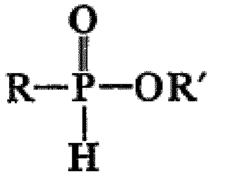

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und
d) wenigstens ein 3-Thiopropionat,

zur Herstellung Polyamid basierter Erzeugnisse mit geringer Änderung des Helligkeitswertes |ΔL*| berechnet gemäß DIN EN ISO 11664-4 nach Heißluftlagerung über 1000h bei 150°C und Erhalt der Schlagzähigkeit gemessen nach ISO180-1U nach Heißluftalterung über 500h bei 140°C mit der Maßgabe, dass auf 100 Massenanteile wenigstens eines als Komponente a) einzusetzenden Polyamids, vorzugsweise Polyamid 6 oder Polyamid 66,
0,03 bis 3 Massenanteile, bevorzugt 0,05 bis 1 Massenanteile, der Komponente b),
0,05 bis 5 Massenanteile, bevorzugt 0,25 bis 1 Massenanteile, der Komponente c) und
0,05 bis 5 Massenanteile, bevorzugt 0,2 bis 1 Massenanteile der Komponente d) eingesetzt werden.

**15.** Verfahren zur Verringerung eines Helligkeitswertverlusts |ΔL*| berechnet gemäß DIN EN ISO 11664-4 über 1000h bei 150°C sowie Erhalt der nach ISO180-1U zu bestimmenden Schlagzähigkeit nach Heißluftalterung über 500h bei 140°C, indem man Mischungen enthaltend

b) 0,03 bis 3 Massenanteile, bevorzugt 0,05 bis 1 Massenanteile wenigstens eines sterisch gehinderten Phenols,
c) 0,05 bis 5 Massenanteile, bevorzugt 0,25 bis 1 Massenanteile wenigstens eines Phosphinsäurederivats der allgemeinen Formel (I),

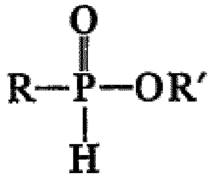

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,05 bis 5 Massenanteile, bevorzugt 0,2 bis 1 Massenanteile, wenigstens eines 3- Thiopropionats,

auf 100 Massenanteile eines als Komponente a) einzusetzenden Polyamids einsetzt.

Europäisches Patentamt
European Patent Office
Office européen des brevets

# EUROPÄISCHER RECHERCHENBERICHT

Nummer der Anmeldung
EP 20 17 7768

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP H06 16929 A (KANEBO LTD) 25. Januar 1994 (1994-01-25)<br>* Absatz [0001] - Absatz [0005] *<br>* Beispiel 1 *<br>* Tabelle 1 *<br>* Absatz [0035] - Absatz [0036] *<br>----- | 1-15 | INV.<br>C08L77/02<br>C08K3/32<br>C08K5/13<br>C08K5/36<br>C08L77/06 |
| Y | EP 2 441 800 A1 (MITSUBISHI GAS CHEMICAL CO [JP]) 18. April 2012 (2012-04-18)<br>* Absatz [0001] - Absatz [0007] *<br>* Beispiel 13 *<br>* Absatz [0029] *<br>* Tabelle 1 *<br>* Absatz [0158] *<br>----- | 1-15 | ADD.<br>C08K7/14<br>C08K5/5313 |
| Y | JP 2014 012773 A (ASAHI KASEI CHEMICALS CORP) 23. Januar 2014 (2014-01-23)<br>* Absatz [0016] *<br>* Beispiel 1 *<br>* Tabelle 1 *<br>----- | 1-15 | |
| | | | RECHERCHIERTE SACHGEBIETE (IPC)<br>C08L<br>C08K |

Der vorliegende Recherchenbericht wurde für alle Patentansprüche erstellt

1

| Recherchenort | Abschlußdatum der Recherche | Prüfer |
|---|---|---|
| München | 28. Oktober 2020 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 17 7768

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

28-10-2020

| Im Recherchenbericht angeführtes Patentdokument | Datum der Veröffentlichung | Mitglied(er) der Patentfamilie | Datum der Veröffentlichung |
|---|---|---|---|
| JP H0616929 A | 25-01-1994 | KEINE | |
| EP 2441800 A1 | 18-04-2012 | AU 2010259649 A1 | 12-01-2012 |
| | | BR PI1011006 A2 | 09-08-2016 |
| | | CA 2764780 A1 | 16-12-2010 |
| | | CN 102459465 A | 16-05-2012 |
| | | EP 2441800 A1 | 18-04-2012 |
| | | JP 5708487 B2 | 30-04-2015 |
| | | JP WO2010143638 A1 | 22-11-2012 |
| | | KR 20120036828 A | 18-04-2012 |
| | | RU 2011154160 A | 20-07-2013 |
| | | US 2012094048 A1 | 19-04-2012 |
| | | WO 2010143638 A1 | 16-12-2010 |
| | | ZA 201200119 B | 27-03-2013 |
| JP 2014012773 A | 23-01-2014 | JP 6035066 B2 | 30-11-2016 |
| | | JP 2014012773 A | 23-01-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005033185 A1
- DE 2702661 A
- DE 4236122 A
- WO 2013083247 A1
- EP 0113229 B1
- WO 2009003976 A1


### In der Beschreibung aufgeführte Nicht-Patentliteratur


- Technische Thermoplaste, Polyamide. Kunststoffhandbuch 3/4. Karl Hansen Verlag, 1998, S16, , S. 148-150
- **S. MOLL.** *Untersuchung der Auswirkungen einer thermischoxidativen Beanspruchung auf das Emissionsverhalten von ABS und PP und der Korrelation mit dem Alterungsgrad,* 2016
- Technische Thermoplaste, Polyamide. Kunststoffhandbuch 3/4. Karl Hansen Verlag, 1998, S16, , S. 157
- **P.H. SEIDEN.** Glasfaserverstärkte Kunststoffe. Springer-Verlag, 1967, 324-325
- Glasfaserverstärkte Thermoplaste. **P. H. SEIDEN ; K. SCHLICHTING.** Glasfaserverstärkte Kunststoffe. Springer Verlag, 1967, 324-325
- *CHEMICAL ABSTRACTS,* 25038-54-4
- *CHEMICAL ABSTRACTS,* 32131-17-2
- *CHEMICAL ABSTRACTS,* 36443-68-2
- *CHEMICAL ABSTRACTS,* 35074-77-2
- *CHEMICAL ABSTRACTS,* 23128-74-7
- *CHEMICAL ABSTRACTS,* 90498-90-1
- *CHEMICAL ABSTRACTS,* 6683-19-8
- *CHEMICAL ABSTRACTS,* 41484-35-9
- *CHEMICAL ABSTRACTS,* 1709-70-2
- *CHEMICAL ABSTRACTS,* 32687-78-8
- *CHEMICAL ABSTRACTS,* 7681-53-0
- *CHEMICAL ABSTRACTS,* 10039-56-2
- *CHEMICAL ABSTRACTS,* 29598-76-3
- *CHEMICAL ABSTRACTS,* 7440-44-0
- *CHEMICAL ABSTRACTS,* 65997-17-3
- *CHEMICAL ABSTRACTS,* 7631-86-9
- *CHEMICAL ABSTRACTS,* 14808-60-7
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1302-76-7
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 13983-17-0
- *CHEMICAL ABSTRACTS,* 67479-91-8
- *CHEMICAL ABSTRACTS,* 12125-28-9
- *CHEMICAL ABSTRACTS,* 14807-96-6
- Chemie Ingenieur Technik (72). Wiley-VCH Verlags GmbH, Marz 2000, 273-276
- *CHEMICAL ABSTRACTS,* 1309-42-8
- *CHEMICAL ABSTRACTS,* 1078142-02-5
- *CHEMICAL ABSTRACTS,* 225789-38-8
- *CHEMICAL ABSTRACTS,* 71449-76-8
- *CHEMICAL ABSTRACTS,* 156024-71-4
- *CHEMICAL ABSTRACTS,* 14059-33-7
- *CHEMICAL ABSTRACTS,* 1309-37-1
- *CHEMICAL ABSTRACTS,* 12014-93-6
- *CHEMICAL ABSTRACTS,* 12031-49-1
- *CHEMICAL ABSTRACTS,* 923954-49-8
- *CHEMICAL ABSTRACTS,* 2170864-77-2
- *CHEMICAL ABSTRACTS,* 817181-98-9
- *CHEMICAL ABSTRACTS,* 42844-93-9
- *CHEMICAL ABSTRACTS,* 72102-84-2
- *CHEMICAL ABSTRACTS,* 56279-27-7
- *CHEMICAL ABSTRACTS,* 13676-91-0
- *CHEMICAL ABSTRACTS,* 203576-97-0
- *CHEMICAL ABSTRACTS,* 6925-69-5
- *CHEMICAL ABSTRACTS,* 98460-24-3
- *CHEMICAL ABSTRACTS,* 8013-07-8
- *CHEMICAL ABSTRACTS,* 115-83-3
- *CHEMICAL ABSTRACTS,* 557-05-1
- *CHEMICAL ABSTRACTS,* 1592-23-0
- *CHEMICAL ABSTRACTS,* 110-30-5
- Kunststoff-Handbuch 3/4, Polyamide. Carl Hanser Verlag, 1998, 374-384